# EUROPEAN PATENT APPLICATION

(11) **EP 2 746 094 A2**
(43) Date of publication of application: **25.06.2014**
(21) Application number: 13197583.1
(22) Date of filing: 17.12.2013
(51) Int. Cl.: B60L 11/18

(54) **Electric charging apparatus and control method thereof**

(30) Priority: 20.12.2012 KR 20120149957
(71) Applicant: LSIS Co., Ltd., Dongan-Gu, Anyang Gyeonggi-Do (KR)
(72) Inventor: Kim, Bum Youl, Anyang-si, Gyeonggi-do 431-080 (KR)
(74) Representative: Lang, Johannes

(57) **Abstract**

An electric charging apparatus and a control method thereof are provided. According to a method of operating a master charging apparatus (100) connected to at least one slave charging apparatus (200), the master charging apparatus receives payment information from a slave charging apparatus, transmits a payment approval request message including the payment information to a payment server (400), receives a payment approval message corresponding to the payment approval request message from the payment server (400), and transmits an electric vehicle charging instruction to the slave charging apparatus corresponding to the payment information among the slave charging apparatuses (200) according to the payment approval message.

## Description

### BACKGROUND

The present disclosure relates to an electric charging apparatus and a control method thereof and more particularly, to an electric charging apparatus for a vehicle.

As global environmental pollution is worsening, use of non-polluting energy is getting more important. Especially, air pollution problems in a metropolitan area are worsening, and an exhaust gas is one of the main causes of them. Under such a situation, recently researches on commercialization of a so-called electric vehicle are actively performed using electricity, which is non-polluting energy, as a power source. The electric vehicle receives electric energy from the outside and charges a battery with it, and then uses a voltage charged in the battery to obtain power, which is mechanical energy, through a motor combined with wheels. That is, since the motor is driven by the voltage charged in the battery, the electric vehicle uses a large capacity rechargeable battery. In addition, for charging the large capacity rechargeable battery, separate electric charging apparatuses are necessary.

The electric charging apparatuses are divided into rapid chargers and slow chargers. The rapid chargers are installed at places for rapid charging a battery during driving like a gas station. Charging time thereof takes about 20 min. On the contrary, the slow chargers are installed at places, such as a parking lot or a shopping mall, where long time parking is expected. Charging time thereof takes about 5 hours.

However, typically, there are limitations on a cost in manufacturing or operating only an electric charging apparatus including all components.

In addition, in order to charge the electric vehicle, a control input, such as a charging request, is performed only at a place at which the electric charging apparatus is installed. Therefore, it is inconvenient for a user to move to the place at which the electric charging apparatus is installed and perform the control input on the electric vehicle.

### SUMMARY

Embodiments provide methods of charging an electric vehicle by using a master charging apparatus and a slave charging apparatus.

In one embodiment, a method of operating a master charging apparatus includes: receiving payment information from a slave charging apparatus; transmitting a payment approval request message including the payment information to a payment server; receiving a payment approval message corresponding to the payment approval request message from the payment server; and transmitting an electric vehicle charging instruction to the slave charging apparatus corresponding to the payment information among the slave charging apparatuses according to the payment approval message.

In another embodiment, a method of operating a slave charging apparatus includes: confirming connection or non-connection with a charging target device; receiving a charging instruction for the charging target device from a master charging apparatus; and providing electricity to the charging target device according to payment information received from the master charging apparatus.

The details of one or more embodiments are set forth in the accompanying drawings and the description below. Other features will be apparent from the description and drawings, and from the claims.

### BRIEF DESCRIPTION OF THE DRAWINGS

Fig. 1 is illustrates a network topology according to an embodiment.
Fig. 2 is a block diagram illustrating an electric charging apparatus according to an embodiment.
Fig. 3 is a ladder diagram illustrating an electric charging method according to an embodiment.
Fig. 4 is a ladder diagram illustrating an electric charging method according to another embodiment.

### DETAILED DESCRIPTION OF THE EMBODIMENTS

Reference will now be made in detail to the embodiments of the present disclosure, examples of which are illustrated in the accompanying drawings.

An electric charging apparatus and a control method thereof according to an embodiment will be described in detail with reference to the accompanying drawings. The invention may, however, be embodied in many different forms and should not be construed as being limited to the embodiments set forth herein; rather, that alternate embodiments included in other retrogressive inventions or falling within the spirit and scope of the present disclosure can easily be derived through adding, altering, and changing, and will fully convey the concept of the invention to those skilled in the art.

It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when a portion, is referred to as being "connected to" or "coupled to" another portion, it may be not only directly connected or coupled to the other portion, but also electrically connected or coupled to the portion with intervening elements present therebetween.

In the following description, usage of suffixes such as 'module', 'part' or 'unit' used for referring to elements is given merely to facilitate explanation of the present invention, without having any significant meaning by itself. It should be noted that 'module', 'part', and 'unit' can be substitutively, alternatively or mixedly used.

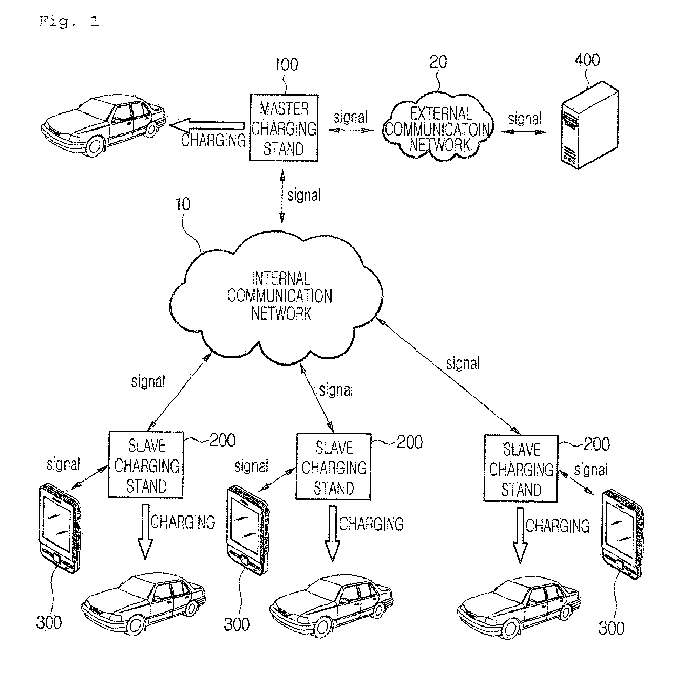

Fig. 1 illustrates a network topology according to an embodiment.

As shown in FIG.1, the network topology according to the embodiment includes an internal communication network 10, an external communication network 20, a master charging stand 100, a slave charging stand 200, a terminal 300, a payment server 400, and an electric vehicle 500.

The internal communication network 10 provides an environment where information may be exchangeable between the master charging stand 100 and the slave charging stand 200 in a wired or wireless manner.

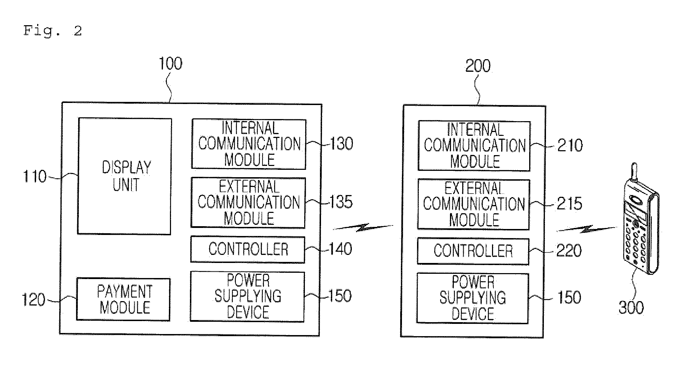

FIG. 2 is a block diagram illustrating an electric charging apparatus according to an embodiment.

The electric charging apparatus according to the embodiment is described with reference to FIG. 2.

The master charging stand 100 may include a display unit 110, a payment module 120, an internal communication module 130, an external communication module 135, a controller 140, and a power supplying device 150. Elements shown in FIG. 2 are not indispensable, and thus the master charging stand 100 including more elements or fewer elements may be also allowed.

The display unit 110 displays (outputs) information processed in the master charging stand 100. The display unit 110 may display a connection state between the terminal 300 and the slave charging stand 200 or between the electric vehicle and the slave charging stand 200. The display unit 110 may display information in relation to payment information or charging. The display unit 110 may include at least one of a liquid crystal display (LCD), a thin film transistor-liquid crystal display (TFT-LCD), an organic light emitting diode (OLED), a flexible display, and a 3-dimensional display.

When the display unit 100 and a sensor sensing a touch operation (hereinafter referred to as 'touch sensor') are forming a mutual layer structure, the display unit 110 may be used as an input device as well as an output device. The touch sensor may have a type of, for example, a touch film, a touch sheet, or a touch pad. The display unit 110 is described herein as an input device, but is not limited hereto. The master charging stand 100 may include a separate input device.

The touch sensor may be configured to convert a change in pressure applied on or electrostatic capacitance generated at a specific portion of the display unit 110 into electrical input signal. The touch sensor may be configured to detect not only touch position and area, but also pressure at the time of touch.

When there is a touch input to the touch sensor, signals corresponding to the touch input are sent to a touch controller. The touch controller processes the signals and transmits corresponding data to the controller 140. Accordingly, the controller 140 may figure out which region of the display unit 110 is touched.

The payment module 120 may include any one of an RFID reader, a credit card terminal, a cache terminal, and another payment means.

The internal communication module 130 performs a short range communication, wireless or wired communication. The internal communication module 130 shares information with the slave charging stand 200 through the internal communication network 10.

The external communication module 135 may share information with the internal communication module 120 of the slave charging stand 200 through the internal communication network 10.

The external communication module 135 may share information with the payment server 400 by using the external communication network 20. In detail, the master charging stand 100 requests a payment approval from the payment server 400 by using the external communication network 20. The payment server 400 transmits a message of the payment approval to the master charging stand 100 by using the external communication network 20.

The controller 140 controls overall operations of the master charging stand 100. For example, the controller 140 performs a control for communication between the slave charging stand 200 and the payment server 400.

The power supplying device 150 may provide electricity to a device needing electric charging. According to the embodiment, the power supplying device 150 may provide electricity to the electric vehicle 500.

The slave charging stand 200 may include an internal communication module 210, a terminal communication module 215, a controller 220, and a power supplying device 150. The elements shown in Fig. 2 are not indispensable, the slave charging stand 200 including more elements or fewer elements may be implemented. In addition, according to the embodiment, the slave charging stand 200 may be operated simultaneously in plural. According to the embodiment, the master charging stand 100 and the slave charging stand 200 may have one-to-many relationship. The slave charging stand 200 may not include the display unit 110, the payment module 120, and the external communication module 135, compared to the master charging stand 100. The slave charging stand 200 may be cheaper that the master charging stand 100. Accordingly, a cost may be reduced by employing the slave charging stand 200 instead of the master charging stand 100 including all the elements.

The internal communication module 210 performs short range communication, wireless or wired communication. The internal communication module 210 shares information with the master charging stand 100 through the internal communication network 10. In detail, the internal communication module 210 may share information with the internal communication module 130 of the master charging stand 100 through the internal communication network 10.

The slave charging stand 200 may share information with the terminal 300 by using the terminal communication module 215. At this time, a separate communication network or the short range communication technology may be used. The short range communication may comply with communication specifications, such as Bluetooth, radio frequency identification (RFID), infrared data association (IrDA), Ultra Wideband (UWB), Zigbee, or digital living network alliance (DLNA). For accessing a wireless network, communication specifications, such as wireless LAN (Wi-Fi), wireless broadband (Wibro), world interoperability for microwave access (Wibro), or high speed downlink packet access (HSDPA), may be used. When the slave charging stand 200 communicates with the terminal 200 by using the short range communication, the terminal communication module 215 may be the short range communication module.

The controller 220 controls overall operations of the slave charging stand 200. For example, the controller 220 performs a control for communication between the master charging stand 100 and the terminal 300.

The terminal 300 may be connected to the slave charging stand 200 and control the slave charging stand 200.

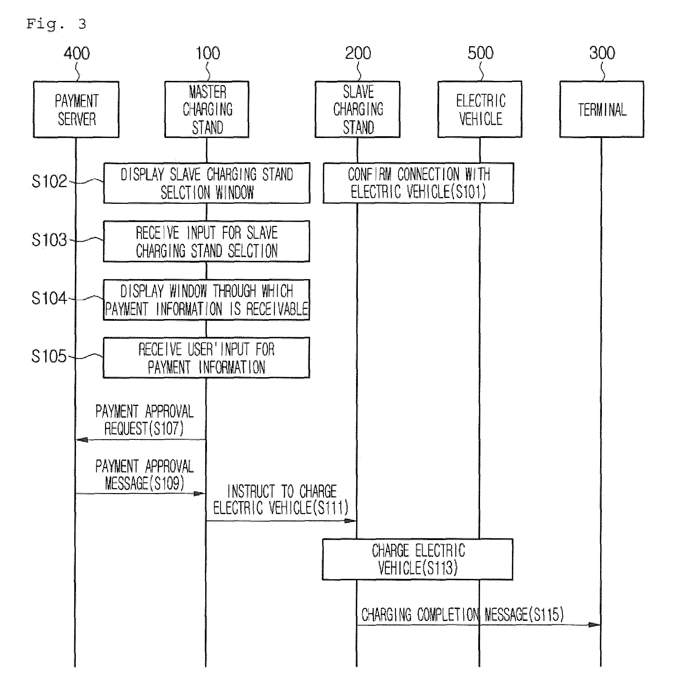

Fig. 3 is a ladder diagram for an electric charging method according to an embodiment.

The electric charging method according to the embodiment is described in relation to Fig. 3.

The controller 220 of the slave charging stand 200 confirms that the electric vehicle 500 and the power supplying device 150 of the slave charging stand 200 are connected (operation S101). The electric vehicle 500 is exemplified herein, but the example is not limited hereto and may be replaced with a device needing electric charging.

The controller 140 of the master charging stand 100 displays a slave charging stand selection window through the display unit 110 (operation S102).

The controller 140 of the master charging stand 100 receives a slave charging stand selection input (operation S103). According to an embodiment, since the master charging stand 100 and the slave charging stand 200 may have one-to-many relationship, a user may select the slave charging stand 200 connected to his/her own electric vehicle 500 through the slave charging stand selection input.

The master charging stand 100 displays a window capable of receiving payment information (operation 104). The payment information according to the embodiment may include a payment scheme, personal information of a payer, a payment amount, electric capacitance to be charged in an electric vehicle.

The controller 140 of the master charging stand 100 receives a user's input (operation S105).

The controller 140 of the master charging stand 100 requests a payment approval from the payment server 400 through the external communication module 135 (operation 107). The payment approval request may include the payment information.

The payment server 400 transmits a payment approval message to the master charging stand 100 in response to the payment approval request (operation S109). The payment approval message may include the payment information.

When receiving the payment approval message from the payment server 400, the master charging stand 100 instructs the slave charging stand 200 to charge the electric vehicle 500 through the internal communication module 130 (operation S111). At this time, the charging may be based on the payment information.

The controller 220 of the slave charging stand 200 charges the electric vehicle 500 connected to the slave charging stand 200 through the power supplying device 150 (operation S113). At this time, an amount of electricity charged by the slave charging stand 200 depends on the payment information received by the master charging stand 100.

When the charging is completed, the slave charging stand 200 transmits a charging completion message to the terminal 300 (operation S115). At this time, the slave charging stand 200 may transmit the charging completion message by using the terminal communication module 215.

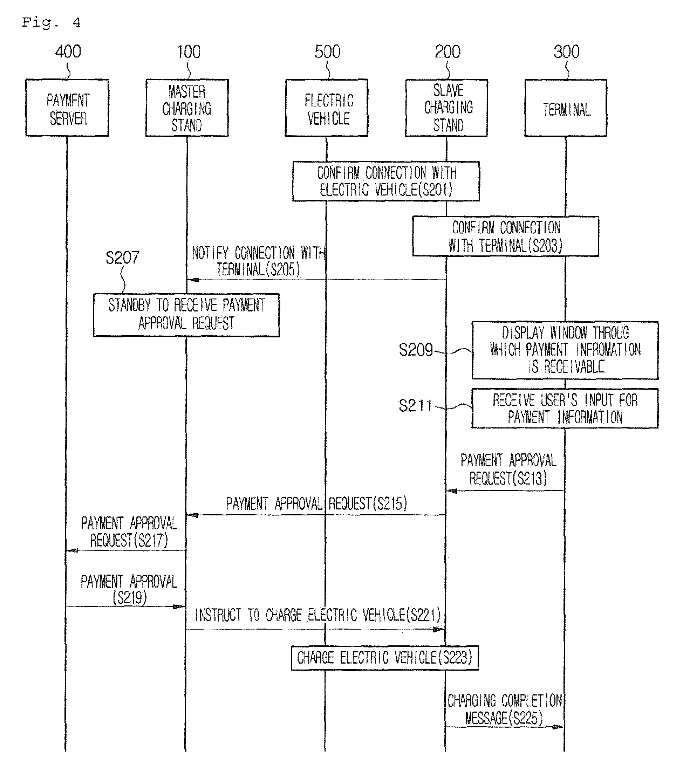

Fig. 4 is a ladder diagram illustrating an electric charging method according to another embodiment.

The electric charging method according to the other embodiment is described in relation to Fig. 4.

The controller 220 of the slave charging stand 200 confirms that the electric vehicle 500 and the power supplying device 150 of the slave charging stand 200 are connected (operation S201). The electric vehicle 500 is exemplified herein, but the example is not limited hereto and may be replaced with a device needing electric charging.

The controller 220 of the slave charging stand 200 confirms connection with the terminal 300 (operation S203). The connection of the slave charging stand 200 with the terminal 300, according to the embodiment, may be performed by using an application or other program.

When receiving notification of the connection of the slave charging stand 200 with the terminal 300, the master charging stand 100 enters into a standby state of receiving the payment approval request (operation S207).

Although not shown in the drawing, the terminal 300 may include a display unit. The terminal 300 may receive a touch input through the display unit, or include a separate input device. The terminal 300 may display information on the terminal 300 through the display unit.

The terminal displays a window capable of receiving the payment information (operation S209). The payment information according to an embodiment may include a payment scheme, personal information of a payer, a payment amount, electric capacitance to be charged in an electric vehicle.

The terminal 300 receives a user's input for the payment information (operation S211).

The terminal 300 requests a payment approval from the slave charging stand 200 (operation S213). At this time, the payment approval request may include payment information.

When receiving the payment approval request from the terminal 300, the controller 220 of the slave charging stand 200 requests a payment approval from a payment server 400 through the external communication module 135 (operation S215). At this time, the payment approval request may include the payment information.

When receiving the payment approval request from the slave charging stand 200, the controller 140 of the master charging stand 100 request a payment approval from the payment server 400 through the external communication module 135 (operation S217). At this time, the payment approval request may include the payment information.

The payment server 400 transmits a payment approval message to the master charging stand 100 in response to the payment approval request (operation S219). At this time, the payment approval message may include the payment information.

When receiving the payment approval message from the payment server 400, the master charging stand 100 instructs the slave charging stand 200 to charge the electric vehicle 500 through the internal communication module 130 (operation S221).

The controller 220 of the slave charging stand 200 charges the electric vehicle 500 connected to the slave charging stand 200 through the power supplying device 150 (operation S223). At this time, an amount of electricity charged by the slave charging stand 200 is based on the payment information.

When completing charging, the slave charging stand 200 transmits a charging completion message to the terminal 300 (operation S225). At this time, the slave charging stand 200 may transmit the charging completion message by using the terminal communication module 215.

The above-described master charging stand 100, slave charging stand 200, and terminal 300 may be formed not by limited application of the configurations of methods of the above-described embodiments, but by selectively combining all or some of the embodiments in order to achieve various modifications.

According to the embodiments, when payment information is input to a master charging stand, the master charging stand requests an payment approval from a payment server. When receiving the payment approval from the payment server, the master charging stand can charge the electric vehicle by instructing a slave charging stand to charge an electric vehicle based on the payment approval.

According to the embodiments, when receiving payment information, a terminal transmits the payment information to a slave charging stand. The slave charging stand transmits the payment information to a master charging stand. The master charging stand requests a payment approval from a payment server. When receiving the payment approval from the payment server, the master charging stand can charge an electric vehicle by instructing the slave charging stand to charge the electric vehicle based on the payment approval.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method of operating a master charging apparatus (100) connected to at least one slave charging apparatus (200), comprising:
receiving payment information from a slave charging apparatus;
transmitting a payment approval request message including the payment information to a payment server (400);
receiving a payment approval message corresponding to the payment approval request message from the payment server (400); and
transmitting an electric vehicle charging instruction to the slave charging apparatus corresponding to the payment information among the slave charging apparatuses (200) according to the payment approval message.

2. The method according to claim 1, wherein the receiving of the payment information further comprises:
displaying a payment information input window; and
receiving the payment information through the window.

3. The method according to claim 1, wherein the payment approval message and the payment approval request message are transmitted and received through the payment server (400) and an external communication network (20).

4. The method according to claim 1, wherein the payment information is received from the corresponding slave charging apparatus through the internal communication network (10).

5. A method of operating a slave charging apparatus (200), comprising:
confirming connection or non-connection with a charging target device;
receiving a charging instruction for the charging target device from a master charging apparatus (100); and
providing electricity to the charging target device according to payment information received from the master charging apparatus (100).

6. The method according to claim 5, wherein the receiving of the charging instruction further comprises:
receiving a payment approval request for charging from a terminal; and
transmitting the payment approval request to the master charging apparatus (100).

7. The method according to claim 5, the payment approval request comprises the payment information.

8. The method according to claim 5, wherein the payment information comprises at least one of a payment scheme, personal information of a payer, a payment amount, electric capacitance to be charged in an electric vehicle.

9. The method according to claim 5, further comprising transmitting a charging completion message to a preset terminal, when the electricity provision is completed.
